# EUROPÄISCHE PATENTSCHRIFT

(11) **EP 0 426 813 B1**
(45) Veröffentlichungstag und Bekanntmachung des Hinweises auf die Patenterteilung: **20.07.1994**
(21) Anmeldenummer: 90908153.1
(22) Anmeldetag: 30.05.1990
(51) Int. Cl.: B09B 3/00, C04B 18/04, C04B 33/13, C02F 11/00

(54) **VERFAHREN ZUM HERSTELLEN VON KLINKERN**
PROCESS FOR MANUFACTURING CLINKERS
PROCEDE DE FABRICATION DE BRIQUES RECUITES

(30) Priorität: 31.05.1989 AT 1321/89
(43) Veröffentlichungstag der Anmeldung: 15.05.1991
(73) Patentinhaber: MAGINDAG Steirische Magnesit-Industrie Aktiengesellschaft, A-1130 Wien (AT)
(72) Erfinder: BIRKNER, Friedrich, A-3384 (AT); SCHWARZ, Wolfgang, A-1080 Wien (AT)
(74) Vertreter: Haffner, Thomas M., Dr.
(86) Internationale Anmeldenummer: AT9000050
(87) Internationale Veröffentlichungsnummer: WO9014899

(56) Entgegenhaltungen:
- EP-A- 0 313 016
- DE-A- 3 630 697
- Chemistry and Industry, no 7, 2 April 1984 (Letchworth, Herts, GB), J. Dwyer et al. "Zeolites for industry", pages 237-245, see page 241, tables 1,2 ; page 243, table 3 and left-hand column, lines 15-27
- Patent Abstracts of Japan, vol. 4, no. 119 (C-22)(601), 23 August 1980
- Patent Abstracts of Japan, vol. 4, no. 46 (C-6)(528), 10 April 1980
- Japanese Patents Gazette, section CH, week X41, 17 Noember 1976, Derwent Publications Tld
- Japanese Patents Gazette, section CH, week Y15, 23 May 1977, Derwent Publications Ltd

## Beschreibung

Die Erfindung bezieht sich auf ein Verfahren zum Herstellen von Klinkern aus schwermetallhaltigen Schlämmen, insbesondere Galvanikschlämmen, Fluß- und/oder Hafenschlämmen, bei welchem die Schlämme mit Ton, insbesondere Ziegeleiton, und ggf. Magerungsmitteln und Flußmitteln vermengt werden und anschließend, insbesondere bei Temperaturen zwischen 750 und 1150°C zu Klinkern gebrannt werden.

Ein Verfahren der eingangs genannten Art ist beispielsweise der AT-PS 387 766 zu entnehmen. Das vorbekannte Verfahren wurde für die Entsorgung von schwermetallhaltigen Schlämmen, wie sie insbesondere in industriellen Beizanlagen oder galvanischen Betrieben anfallen, entwickelt und durch die Einbindung der Schwermetallverbindungen bzw. Schwermetalle in einen Klinker wurde ein Produkt geschaffen, bei welchem die schwermetallhaltigen Schlämme mit in einer weitgehend verglasten Masse eingeschlossen sind, wodurch die Gefahr einer Elution von wasserlöslichen Schwermetallsalzen wesentlich herabgesetzt wurde. Gleichzeitig wurde mit den Klinkern ein Produkt geschaffen, welches sich durch charakteristische dunkle Farbtöne auszeichnet und in der Bauindustrie Verwendung finden konnte. Das vorbekannte Verfahren wurde hiebei so geführt, daß die Brenndauer des Gemenges aus Ton und schwermetallhaltigen Schlämmen in Abhängigkeit von der gewünschten niedrigen Restporosität gewählt wurde, wobei eine Restporosität von deutlich unter 6% angestrebt wurde. Die gebrannten Produkte sind hiebei weitgehend neutral, so daß auch bei saurem Regen nur geringe Herauslösung von Schwermetallsalzen beobachtet werden konnte. Klinker unterscheiden sich in diesem Punkt wesentlich von Baumaterialien deren Stabilität durch hydraulische Bindung erzielt wird. Gips oder Beton sind deshalb ungeeignet schwermetallhaltige Schlämme gegen Auswaschen gesichert einzuschließen, da sie zum Unterschied von Klinkern gegen chemische Angriffe, z.B. Chlorid, Sulfat, saurer Regen usw., nicht resistent sind und hohe Mengen an Schwermetallsalzen ausgewaschen werden können.

Für die Klinkerherstellung werden als Magerungsmittel zumeist Schamottemehl od.dgl. eingesetzt und die Ziegel können in Vakuumstrangpressen geformt werden.

In der AT-PS 387 766 wurde bereits zur Verbesserung des Elutionsverhaltens vorgeschlagen, dem Ziegeleiton neutrale oder saure Zusätze, wie Siliziumdioxid oder ein aktives Kieselerdeprodukt zuzusetzen. Das Brennen zu Klinkern führt zu einer Überführung der Schwermetallverbindungen in schwer lösliche Oxide und die seinerzeit vorgeschlagenen Zusätze sollten eine Beschleunigung der Verglasung bewirken. Neben dieser die Verglasung beschleunigenden Wirkung wurde derartigen Kieselerdeprodukten bereits eine Kationenaustauscherwirkung zugeschrieben, da derartige Produkte als Lewis-Säuren wirksam sind. Die Zusätze wirken darüberhinaus dahingehend, daß die Porosität verringert wird und damit das Auswaschen von Metallsalzen weiter erschwert werden sollte.

Je nach Herkunft der Schlämme ist es in der Regel erforderlich, saure Gewässer zu neutralisieren, wobei Schwermetalle als Hydroxide Niederschläge bilden. Die gebildeten Hydroxide weisen zum Teil jedoch amphotäre Eigenschaften auf und haben ihre Löslichkeitsmaxima bei verschiedenen pH-Werten. Dies bedeutet, daß zumindest ein Teil der Schwermetalle in löslicher Form vorliegt. Derartige wasserlösliche Verbindungen können in Klinker nur ungenügend eingebunden werden und gelangen beim Trocknungsprozeß mit dem Wasser an die Oberfläche der Klinker. Es kommt somit zu einer unerwünschten Anreicherung derartiger Verbindungen in den oberflächennahen Schichten, welche in der Folge auch dann, wenn diese Verbindungen nahe der Oberfläche beim Brennen weitestgehend in unlösliche Oxide umgewandelt werden, erhöhte Elutionswerte für diese Schwermetalle, insbesondere unter Bedingungen eines sauren Regens ergeben.

Die Erfindung zielt nun darauf ab, eine Mischung für die Herstellung von Klinkern bereitzustellen, bei welcher beim Trocknen die Gefahr einer Migration von wasserlöslichen Schwermetallverbindungen in oberflächennahe Bereiche weitestgehend unterbunden wird, und welche insgesamt eine homogenere Konzentrationsverteilung der Schwermetallverbindungen im Inneren der Klinker sicherstellt, so daß die Elutionseigenschaften, insbesondere bei Bedingungen eines sauren Regens, weiter verbessert werden. Zur Lösung dieser Aufgabe besteht das erfindungsgemäße Verfahren im wesentlichen darin, daß den Schlämmen und dem Ton vor dem Brennen Zeolithe zugemischt werden. Dadurch, daß dem Ton vor dem Brennen Zeolithe zugemischt werden, werden Zuschläge eingebracht, welche insbesondere im alkalischen Milieu eine deutlich bessere Adsorption von Schwermetallen zeigen und welche darüberhinaus beim Übergang in neutrales oder schwach saures Milieu deutliche Ionenaustauscheigenschaften zeigen, wodurch stabile Bindungen mit Schwermetallionen gebildet werden. Die Herabsetzung der Wasserlöslichkeit führt hiebei zu einer deutlich geringeren Migration und bei entsprechender Homogenisierung der Mischung zu einer gleichbleibenden Verteilung der Schwermetalle im Endprodukt nach dem Brennprozeß. Mit Vorteil werden erfindungsgemäß Zeolithe mit unterschiedlicher Kationenbeladung, insbesondere mit Erdalkalien und Alkalien beladene Zeolithe eingesetzt, wobei insbesondere die mit Calzium bzw. Magnesium beladenen Zeolithe im alkalischen Milieu eine deutliche Verbesserung der Adsorption der Schwermetallverbindungen zeigen und die mit Alkalien beladenen Zeolithe einen Ionenaustausch im neutralen oder schwach sauren Milieu ermöglichen. Geeignete Zeolithe können hiebei aus der Gruppe der Clinoptilolithe, Ferrionithe, Philipsithe, Mesolithe, Blaumontithe und/oder Ereonithe gewählt werden.

Um sicherzustellen, daß auch nach einer alkalischen Fällung zur Bildung von Hydroxiden die Ionenaustauscheigenschaften von Zeolithen im neutralen od.ggf. schwach sauren Milieu beim Brennen voll genützt werden können, hat es sich als besonders vorteilhaft erwiesen, wenn das erfindungsgemäße Verfahren so durchgeführt wird, daß zusätzlich zu den Zeolithen aktive Kieselerdeprodukte mit BET-Zahlen über 50 m²/g vorzugsweise über 200 m²/g, eingesetzt werden. Der Zusatz von derartigen Kieselerdeprodukten mit hoher spezifischer Oberfläche führt zu einer deutlichen Senkung des pH-Wertes und zu einer Pufferung nahe dem Neutralpunkt, so daß optimale Ionenaustauschbedingungen für die verwendeten Zeolithe geschaffen werden. Gleichzeitig bildet sich bei einem derartigen Ionenaustausch auf Grund der von den Zeolithen freigesetzten Erdalkalien Calziumsilikat, welches der Herabsetzung der Verglasungstemperatur dient und die Restporosität deutlich verringert. Mit Vorteil wird hiebei als aktives Kieselerdeprodukt ein durch Laugen mit Salzsäure gereinigter Serpentin mit Korngrößen von maximal 5 mm, vorzugsweise 0,01 - 2 mm, eingesetzt.

Um die jeweils günstigstens Ionenaustauschbedingungen sicher zu erreichen wird mit Vorteil so vorgegangen, daß Zeolithe und Kieselerdeprodukte im Mengenverhältnis von 10:1 bis 1:10 eingesetzt werden, wobei die Menge der Zeolithe und ggf. Kieselerdeprodukte zur Erzielung einer möglichst weitgehenden Abbindung von Schwermetallverbindungen mit Vorteil so gewählt wird, daß Zeolithe und ggf. Kieselerdeprodukte in Mengenverhältnissen zum Trockensubstanzgehalt der schwermetallhaltigen Schlämme von 1:100 bis 10:1 eingesetzt werden.

Um auch bei höheren Anteilen von Galvanikschlämmen und entsprechend höheren Anteilen an Zeolithen und Kieselerdeprodukten die einwandfreie Ausformung von Klinkern, beispielsweise durch Strangpressen zu ermöglichen, wird mit Vorteil so vorgegangen, daß Bentonite zugesetzt werden.

Derartige Bentonite verbessern die plastischen Eigenschaften und damit die Ziehfähigkeit, wobei aber die zugesetzten Bentonite gleichzeitig in der Lage sind toxische organische Verbindungen abzubinden. Bentonite verfügen darüberhinaus über Ionenaustauscherfähigkeiten, so daß auch durch den Zusatz von Bentoniten eine Homogenisierung der Verteilung der Schwermetalle im Endprodukt erzielt werden kann.
Zur Ausfällung von Schwermetallsalzen werden mit Vorteil die Schlämme vor oder beim Mischen mit Zeolithen auf einen pH-Wert von 7,5 bis 9,5 eingestellt. Zur Erzielung eines für den Ionenaustausch an Zeolithen geeigneten Milieus werden hiebei vorzugsweise Kieselerdeprodukte in einer Menge zugesetzt, welche eine Absenkung des pH-Wertes auf 6 bis 8, insbesondere eine weitgehende Neutralisation ergibt.
Die beim Brennen der Klinker entstehenden Verbrennungsabgase können flüchtige Schwermetallverbindungen, insbesondere Cadmium, Quecksilber, Blei oder Zinkverbindungen enthalten, und es ist im Rahmen des erfindungsgemäßen Verfahrens besonders vorteilhaft so vorzugehen, daß die Abgase aus dem Brennvorgang der Klinker über Zeolithe gefiltert werden und daß das gebrauchte Filtermaterial als Zuschlagsstoff den Schlämmen zugesetzt wird, wodurch sichergestellt wird, daß auch das verwendete Filtermaterial innerhalb des Prozesses entsorgt werden kann.
Die Verwendung von Zeolithen im Zusammenhang mit der Herstellung von Katalysatorträgern, Füllmitteln sowie als Zusatz für Schleifmittel ist der EP-A-313 016 zu entnehmen.
Die Erfindung wird nachfolgend an Hand von Adsorptionsversuchen näher erläutert:
Eine erste Versuchsreihe wurde als Screening Test für die maximale Schwermetallab- und -adsorption durchgeführt. Für die Versuchsdurchführung wurden in 1000 ml eine 0,05 M Schwermetallnitratlösung bei einem pH-Wert von 5,8 einmal 10 g eines mit Natrium- und Kaliumionen beladenen natürlichen Zeolithes (Zl) suspendiert und an in einem zweiten Versuch wurden in einer identen Schwermetallnitratlösung 10 g eines mit Calzium- und Magnesiumionen beladenen natürlichen Zeolithes suspendiert. Die Schwermetallnitratlösung enthielt vor Zugabe der jeweiligen Zeolithe 3,3 ppm Zinkionen, 10,4 ppm Bleiionen, 2,9 ppm Nickelionen, 2,6 ppm Chromionen, 5,6 ppm Cadmiumionen und 3,2 ppm Kupferionen. Eine dritte derartige Schwermetallnitratlösung wurde Als Referenzlösung durch ein Glasfilter mit einer Porengröße von 16 bis 30 »m filtriert und diese Lösung wies nach 30 min folgende Zusammensetzung auf:

| Metall | Ref |
|---|---|
| Zn | 0,68 ppm |
| Pb | 7,83 ppm |
| Ni | 2,80 ppm |
| Cr | 1,18 ppm |
| Cd | 4,77 ppm |
| Cu | 2,84 ppm |

Demgegenüber enthielt die Lösung, in welcher der Zeolith (Z1) suspendiert wurde, nach 30 min nur mehr 0,01 ppm Zink, was in bezug auf die Referenzlösung einer um 99% verbesserten Adsorption entspricht, 0,01 ppm Bleiionen, was in bezug auf die Referenzlösung einer um 99,9% verbesserten Adsorption entspricht, 0,02 ppm Nickelionen (99% verbesserte Adsorption), 0,01 ppm Chromionen (99% verbesserte Adsorption), 0,79 ppm Cadmiumionen, was in bezug auf die Referenzlösung einer um 83% verbesserten Adsorption entspricht und 0,03 ppm Kupferionen, was in bezug auf die Referenzlösung einer um 98,9% verbesserten Adsorption entspricht. Die Bestimmung der Adsorption wurde mit induktiv gekoppelter Plasmaemission (ICP) durchgeführt. Die Bestimmung der Blei-, Cadmium- und Kupfergehalte dieser Lösung wurde zu Vergleichszwecken auch polarographisch durchgeführt und es ergab sich, daß 99% der Bleiionen adsorbiert wurden, 79% der Cadmiumionen adsorbiert wurden und 94% der Kupferionen adsorbiert wurden. Auch eine neuerliche polarographische Messung nach 24 h ergab keine wesentliche Änderung dieser Werte.

Bei der mit dem Calzium- und Magnesiumionen beladenen Zeolith (Z2) der behandelten Lösung wurden nach 30 min 0,01 ppm Bleiionen, was in bezug auf die Referenzlösung einer um 99% verbesserten Adsorption entspricht, gefunden, 1,0 ppm Cadmiumionen, was in bezug auf die Referenzlösung einer um 39% verbesserten Adsorption entspricht und 0,11 ppm Kupferionen, was in bezug auf die Referenzlösung einer um 93% verbesserten Adsorption entspricht, gefunden. Die angegebenen Werte wurden polarographisch bestimmt. Nach 24 h wurde eine neuerliche Messung der Adsorption des Zeolithen (Z2) durchgeführt und es wurden folgende Werte gefunden:

| Metall | Z2 | % Verbesserung d.Ads. |
|---|---|---|
| Zn | 0,028 ppm | 95,9 % |
| Pb | < 0,1 ppm | > 98,7 % |
| Ni | 1,67 ppm | 40,3 % |
| Cr | 0,04 ppm | 97,0 % |
| Cd | 2,75 ppm | 42,1 % |
| Cu | 0,03 ppm | 98,9 % |

Diese Adsorptionsanalysen wurden nur mit ICP durchgeführt. Es zeigt sich, daß die besten Adsorptionswerte mit dem Zeolithen (Z1) erzielt werden konnten, daß jedoch bei dem angegebenen pH-Wert auch mit dem Zeolithen (Z2) bedeutend bessere Adsorptionswerte als mit üblichen Filtrierungsverfahren erzielt werden konnten.

Um auch die Schwermetalladsorption im alkalischen Medium überprüfen zu können wurden nach 24 h sowohl die Referenzlösung als auch die beiden Suspensionen durch Zugabe von Natronlauge alkalisch gemacht (pH = 9) und weitere 24 h gerührt. Nach diesen 24 h wurde ein neuerlicher Adsorptionsversuch durchgeführt. Die Referenzlösung enthielt bei diesem pH-Wert und neuerlicher Filtration durch ein Glasfilter mit der Porengröße von 16 bis 30 »m folgende Zusammensetzung:

| Metall | Referenz |
|---|---|
| Zn | < 0,01 ppm |
| Pb | < 0,10 ppm |
| Ni | 0,42 ppm |
| Cr | < 0,01 ppm |
| Cd | 1,49 ppm |
| Cu | < 0,02 ppm |

In bezug auf die Referenzlösung enthielt die mit dem Zeolith Z1 behandelte Lösung 0,93 ppm Cadmiumionen, was in bezug auf die Referenzlösung einer um 52% verbesserten Adsorption entspricht. Diese Analyse wurde wiederum mit ICP durchgeführt. Nach weiterem 24-stündigen Rühren wurde die Adsorption der mit mit dem Zeolith Z1 behandelten Lösung neuerlich polarographisch bestimmt. Nach diesem Zeitraum wurden in dieser Lösung 0,5 ppm Nickelionen gefunden, was gegenüber der Referenzlösung keinerlei Verbesserung bedeutet. Außerdem wurden 1,38 ppm Cadmiumionen aufgefunden, was nur eine um 7% verbesserte Adsorption gegenüber der Referenzlösung bedeutet. Es zeigt sich somit, daß unter alkalischen Bedingungen der Zeolith Z1 gegenüber einer konventionellen Aufbereitung von Schwermetallnitrallösungen keine wesentliche Verbesserung zeigt.

Die mit dem Zeolith Z2 behandelte Lösung wies bei einer Analyse mittels ICP 0,02 ppm Nickelionen auf, was einer um 95% verbesserten Adsorption gegenüber der Referenzlösung entspricht. Die Adsorption der Cadmiumionen war gegenüber der Referenzlösung um 98% verbessert und es wurden lediglich 0,03 ppm an Cadmiumionen gefunden.

Nach weiteren 24 h wurde diese Messung wiederholt und es konnten nach wie vor lediglich 0,02 ppm Nickelionen in der Lösung gefunden werden. Die Messung der Cadmiumionen ergab 0,07 ppm, was immer noch einer um 95% verbesserten Adsorption gegenüber der Referenzlösung entspricht.

Zusammenfassend kann gesagt werden, daß insbesondere Zeolith Z2 im alkalischen Medium eine bedeutend verbesserte Adsorption gegenüber der Referenzlösung zeigt und daß mit dem Zeolith Z1 eine zumindest gleich gute Adsorption erzielt werden kann.

In einer zweiten Versuchsreihe wurde die Selektivität von chemisch aktivierten Zeolithen bestimmt. Als Referenzsubstanz wurde hier ein nicht aktivierter Zeolith, welcher mit Natrium- und Kaliumionen beladen ist (Z1) verwendet. Bei dem Versuch wurden je 2 g des Zeolith Z1 und des mit Calzium und Magnesium beladenen Zeolithes (Z2) in je 100 ml einer 0,2M Schwermetalllösung suspendiert und mit einem Magnetrührer bei mittlerer Geschwindigkeit gerührt. Der pH-Wert der Lösung betrug 5. Die Adsorption der Zeolithe wurde nach 24 h durch Adsorptionsmessungen mit ICP bestimmt und führte zu folgendem Ergebnis:

| Metall | Ausgangslösung | Z1 Ref. | Z1 akt. | Z2 akt. |
|---|---|---|---|---|
| Zn | 5.95 ppm | | | |
| Pb | 39.74 ppm | 15 ppm (62%) | 1.8 ppm (96%) | 1.8 ppm (96%) |
| Ni | 11.03 ppm | | | |
| Cr | 10.08 ppm | 10 ppm ( 0%) | 8.3 ppm (18%) | 8.4 ppm (17%) |
| Cd | 18.71 ppm | 18 ppm ( 4%) | 16 ppm (15%) | 15 ppm (20%) |
| Cu | 15.31 ppm | 14 ppm (10%) | 12.2 ppm (20%) | 10 ppm (35%) |

Bei diesem Adsorptionsversuch zeigte sich, daß insbesondere der aktivierte Zeolith Z2 eine gegenüber dem nicht aktivierten Zeolith Z1 deutlich verbesserte Adsorptionsfähigkeit aufweist. Auch der aktivierte Zeolith Z1 zeigt gegenüber dem nicht aktivierten Zeolith Z1, welcher als Referenzlösung eingesetzt wurde, eine verbesserte Aktivität. Jedoch ist die Verbesserung nicht mit jener des aktivierten Zeolithes Z2 vergleichbar.

Zusammenfassend kann festgehalten werden, daß durch Einsatz von mit Alkalien oder Erdalkalien beladenen Zeolithen eine weitgehende Adsorption von Schwermetallionen aus Schwermetallnitratlösungen sowohl in dem schwach sauren als auch im leicht alkalischen Milieu nahezu vollständig gelingt.

## Patentansprüche

1. Verfahren zum Herstellen von Klinkern aus schwermetallhaltigen Schlämmen, wie z.B. Galvanikschlämmen, Fluß- und/oder Hafenschlämmen, bei welchem die Schlämme mit Ton, insbesondere Ziegeleiton, und ggf. Magerungsmitteln und Flußmitteln vermengt werden und anschließend bei Temperaturen zwischen 750 und 1150°C zu Klinkern gebrannt werden, dadurch gekennzeichnet, daß den Schlämmen und dem Ton vor dem Brennen Zeolithe zugemischt werden.

2. Verfahren nach Anspruch 1, dadurch gekennzeichnet, daß Zeolithe mit unterschiedlicher Kationenbeladung, insbesondere mit Erdalkalien und Alkalien beladene Zeolithe eingesetzt werden.

3. Verfahren nach Anspruch 1 oder 2, dadurch gekennzeichnet, daß zusätzlich zu den Zeolithen aktive Kieselerdeprodukte mit BET-Zahlen über 50 m²/g vorzugsweise über 200 m²/g, eingesetzt werden.

4. Verfahren nach einem der Ansprüche 1, 2 oder 3, dadurch gekennzeichnet, daß als aktives Kieselerdeprodukt ein durch Laugen mit Salzsäure gereinigter Serpentin mit Korngrößen von maximal 5 mm, vorzugsweise 0,01 - 2 mm, eingesetzt wird.

5. Verfahren nach einem der Ansprüche 1 bis 4, dadurch gekennzeichnet, daß Zeolithe und Kieselerdeprodukte im Mengenverhältnis von 10:1 bis 1:10 eingesetzt werden.

6. Verfahren nach einem der Ansprüche 1 bis 5, dadurch gekennzeichnet, daß Zeolithe und ggf. Kieselerdeprodukte in Mengenverhältnissen zum Trockensubstanzgehalt der schwermetallhaltigen Schlämme von 1:100 bis 10:1 eingesetzt werden.

7. Verfahren nach einem der Ansprüche 1 bis 6, dadurch gekennzeichnet, daß Bentonite zugesetzt werden.

8. Verfahren nach einem der Ansprüche 1 bis 7, dadurch gekennzeichnet, daß die Schlämme vor oder beim Mischen mit Zeolithen auf einen pH-Wert von 7,5 bis 9,5 eingestellt werden und daß Kieselerdeprodukte in einer Menge zugesetzt werden, welche eine Absenkung des pH-Wertes auf 6 bis 8, insbesondere eine weitgehende Neutralisation ergibt.

9. Verfahren nach einem der Ansprüche 1 bis 8, dadurch gekennzeichnet, daß die Abgase aus dem Brennvorgang der Klinker über Zeolithe gefiltert werden und daß das gebrauchte Filtermaterial als Zuschlagsstoff den Schlämmen zugesetzt wird.

## Claims

1. Process for the production of clinkers from heavy metal-containing slurries, such as e.g. electroplating slurries, river and/or harbour slurries, in which the slurries are blended with clay, in particular brickwork clay, and optionally leaning agents and fluxing agents and then fired at temperatures between 750 and 1150°C to give clinkers, characterized in that zeolites are mixed with the slurries and the clay prior to firing.

2. Process according to claim 1, characterized in that zeolites with different cation loadings, in particular zeolites loaded with alkaline earths and alkalis, are used.

3. Process according to claim 1 or 2, characterized in that, in addition to the zeolites, active silica products with BET numbers above 50 m²/g, preferably above 200 m²/g, are used.

4. Process according to one of claims 1, 2 or 3, characterized in that a serpentine having particle sizes of 5 mm maximum, preferably 0.01 - 2 mm, and purified by leaching with hydrochloric acid is used as the active silica product.

5. Process according to one of claims 1 to 4, characterized in that zeolites and silica products are used in the quantity ratio of 10:1 to 1:10.

6. Process according to one of claims 1 to 5, characterized in that zeolites and optionally silica products are used in quantity ratios to the dry substance content of the heavy metal-containing slurries of 1:100 to 10:1.

7. Process according to one of claims 1 to 6, characterized in that bentonites are added.

8. Process according to one of claims 1 to 7, characterized in that the slurries are set at a pH value of 7.5 to 9.5 prior to or during mixing with zeolites, and that silica products are used in a quantity which brings about a lowering of the pH value to 6 or 8, in particular an extensive neutralisation.

9. Process according to one of claims 1 to 8, characterized in that the waste gases from the firing process of the clinkers are filtered out over zeolites and that the used filter material is added to the slurries as aggregate.

## Revendications

1. Procédé pour produire des clinkers à partir de boues contenant des métaux lourds comme, par exemple, les boues d'électrolyse, les boues fluviales et/ou portuaires, dans lequel les boues sont mélangées à de l'argile, en particulier de l'argile de briquetterie et éventuellement des amaigrissants et des fondants, puis cuits à des températures d'entre 750 et 1150°C pour former des clinkers, ***caractérisé en ce qu***'on ajoute en mélange des zéolithes aux boues et à l'argile avant la cuisson.

2. Procédé selon la Revendication 1, ***caractérisé en ce qu***'on utilise des zéolithes possédant différentes charges cationiques, en particulier des zéolithes chargées de substances alcalino-terreuses et alkalines.

3. Procédé selon la Revendication 1 ou 2, ***caractérisé en ce qu***'on utilise, en supplément des zoélithes, des produits siliceux actifs ayant des indices BET (surface spécifique) de plus de 50 m²/g, de préférence de plus de 200 m²/g.

4. Procédé selon une des Revendications 1, 2 et 3, ***caractérisé en ce qu***'on utilise, comme produits siliceux, une serpentine épurée par des lessives à l'acide chlorhydrique, d'une grosseur de grain de 5 mm au maximum, de préférence de 0,01 à 2 mm.

5. Procédé selon une des Revendications 1 à 4, ***caractérisé en ce qu***'on utilise des zoélithes et des produits siliceux dans un rapport quantitatif de 10:1 à 1:10.

6. Procédé selon une des Revendications 1 à 5, ***caractérisé en ce qu***'on utilise des zéolithes et éventuellement des produits siliceux dans des rapports quantitatifs de 1:100 à 10:1, relativement à l'extrait sec des boues contenant des métaux lourds de 1:100 à 10:1.

7. Procédé selon une des Revendications 1 à 6, ***caractérisé en ce qu***'on ajoute des bentonites.

8. Procédé selon une des Revendications 1 à 7, ***caractérisé en ce que*** le pH des boues est ajusté sur 7.5 à 9.5 avant ou pendant le mélange avec les zéolithes, et que des produits siliceux sont ajoutés en une quantité qui provoque un abaissement du pH à une valeur de 6 à 8, et, notamment, qui assure une bonne neutralisation.

9. Procédé selon une des Revendications 1 à 8, ***caractérisé en ce que*** les gaz de fumée issus du processus de cuisson des clinkers sont filtrés sur des zéolithes et en ce que la matière filtrante utilisée est ajoutée aux boues en qualité d'additif.
